# FASCICULE DE BREVET EUROPEEN

(11) **EP 3 377 374 B1**
(45) Date de publication et mention de la délivrance du brevet: **28.08.2019**
(21) Numéro de dépôt: 16806270.1
(22) Date de dépôt: 10.11.2016
(51) Int. Cl.: B60R 19/18

(54) **SYSTÈME D'ASSEMBLAGE DE DEUX PIÈCES AVEC ORGANE DE GUIDAGE ET ÉLÉMENT DE VERROUILLAGE INTÉGRÉS**
SYSTEM ZUM ZUSAMMENBAU VON ZWEI TEILEN MIT EINGEBAUTEM FÜHRUNGSELEMENT UND VERRIEGELUNGSELEMENT
SYSTEM FOR ASSEMBLING TWO PARTS WITH BUILT-IN GUIDE MEMBER AND LOCKING ELEMENT

(30) Priorité: 18.11.2015 FR 1561078
(43) Date de publication de la demande: 26.09.2018
(73) Titulaire: Compagnie Plastic Omnium, 69007 Lyon (FR)
(72) Inventeur: CORNET, Olivier, 01700 Miribel (FR)
(74) Mandataire: LLR
(86) Numéro de dépôt international: PCT/FR2016/052918
(87) Numéro de publication internationale: WO 2017/085379

(56) Documents cités:
- EP-A1- 0 970 854
- EP-A1- 1 674 337
- WO-A1-2012/173248
- FR-A1- 2 744 966

## Description

La présente invention concerne le domaine automobile, et plus particulièrement un ensemble comprenant une première pièce, et une seconde pièce faisant partie de la carrosserie d'un véhicule automobile, la première pièce étant destinée à être assemblée sur la seconde pièce.

Sur un véhicule automobile il est d'usage de rapporter des pièces qui sont destinées à être fixées sur l'extérieur du véhicule. Une telle pièce (appelée première pièce), est par exemple un parechoc, et est assemblée sur une partie de la carrosserie ou caisse (appelée seconde pièce) du véhicule. Cette partie est par exemple une poutre du véhicule. Pour réaliser cet assemblage, il est nécessaire de munir cette partie du véhicule et/ou cette première pièce, d'éléments d'accrochage. Par exemple un élément d'accrochage est fixé à l'aide de rivets ou vis/écrous sur cette partie, puis la première pièce est clipsée (encliquetée) sur cet élément d'accrochage. Alternativement, un élément d'accrochage muni de vis est fixé sur la première pièce, puis l'ensemble constitué de cette première pièce et de cet élément d'accrochage est assemblé sur la partie du véhicule à l'aide de ces vis.

Dans tous les cas, on utilise des rivets ou des vis/écrous pour solidariser la première pièce sur une partie du véhicule par l'intermédiaire d'éléments d'accrochage.

Une telle méthode de solidarisation nécessite des opérations d'assemblage manuel impliquant l'utilisation d'outils. Ces opérations sont donc longues, coûteuses et ralentissent la production du véhicule sur la chaine de montage. Chacun des documents EP 1 674 337 A1, FR 2 744 966, EP 0 970 854 A1 et WO 2012/173248 A décrit un ensemble selon le préambule de la revendication 1.

La présente invention vise à remédier à ces inconvénients.

L'invention propose un ensemble avec les caractéristiques de la revendication 1.

Grâce à ces dispositions, on assemble sans outil de montage spécifique (visseuse, riveteuse) ni élément de fixation à rapporter (vis, rivet, clip, rondelle), donc en une seule opération, la première pièce sur la seconde pièce.

Le fait que la première pièce présente un organe de guidage et un élément de verrouillage permet d'obtenir un assemblage de ces deux pièces qui est plus aisé et plus rapide.

L'ensemble selon l'invention constitue un système d'assemblage de deux pièces avec organe de guidage et élément de verrouillage intégrés.

L'invention concerne également un procédé d'assemblage d'un ensemble selon la revendication 1.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue latérale montrant un ensemble selon l'invention avant d'être en position d'assemblage,
- la figure 2 est une vue latérale montrant un ensemble selon l'invention en position intermédiaire d'assemblage,
- la figure 3 est une vue latérale montrant un ensemble selon l'invention en position finale d'assemblage,
- la figure 4 est une vue de face montrant l'élément de verrouillage,
- la figure 5 est une vue en coupe de l'élément de verrouillage de la figure 4 selon le plan V-V avec l'élément saillant,
- la figure 6 est une vue montrant l'élément saillant et l'élément de verrouillage selon un autre mode de réalisation de l'invention,
- la figure 7 est une vue montrant l'élément saillant et l'élément de verrouillage selon encore un autre mode de réalisation de l'invention.

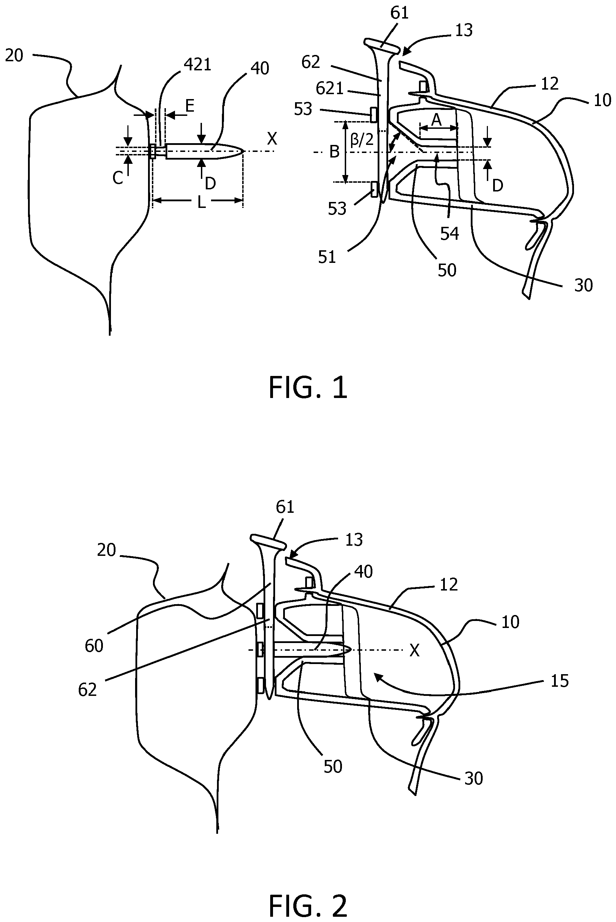

La figure 1 montre une partie de la carrosserie d'un véhicule automobile, cette partie constituant une seconde pièce 20. La seconde pièce 20 comporte un élément saillant 40 qui s'étend selon un axe principal X. Cet élément saillant 40 est une tige qui est fixée à une de ses extrémités par soudage ou collage sur la seconde pièce 20. L'élément saillant 40 s'étend sensiblement perpendiculairement à la surface de la portion de la seconde pièce 20 sur laquelle il est fixé.

Alternativement, cette fixation est réalisée par assemblage mécanique (vissage, rivetage, encliquetage). Cette solution est moins intéressante car elle nécessite l'ajout d'éléments d'étanchéité entre l'élément saillant 40 et la seconde pièce 20, et de perçage de la seconde pièce 20.

Alternativement, l'élément saillant 40 fait partie intégrante de la seconde pièce 20.

Ainsi, l'élément saillant 40 et la seconde pièce 20 sont réalisés d'une seule pièce, par exemple par moulage d'un même matériau.

Dans tous les cas, selon l'invention, la liaison entre l'élément saillant 40 et la seconde pièce 20 est suffisamment solide, et l'élément saillant 40 suffisamment rigide, pour que cet élément saillant supporte au moins une partie du poids de la première pièce 10.

Sur la figure 1 est représenté une première pièce 10 en coupe transversale, en l'espèce un parechoc. La première pièce 10 est située sur l'extérieur du véhicule. La première pièce 10 comporte un support 30 qui est fixé sur la première pièce 10. Cette fixation est réalisée par exemple par soudure, encliquetage, agrafage, collage, rivetage. Le support 30 peut également être moulé directement avec le reste de la première pièce 10.

Dans tous les cas, il est avantageux que ces éléments de fixation ne soient pas visibles de l'extérieur lorsque la première pièce 10 est en position d'assemblage sur la seconde pièce 20 (voir ci-dessous).

Avantageusement, le support 30 est monté en amont sur la première pièce 10, avant son assemblage avec la seconde pièce 20.

De préférence, le support 30 est situé par rapport au reste de la première pièce 10 de telle sorte qu'il n'est pas visible de l'extérieur lorsque la première pièce 10 est en position d'assemblage sur la seconde pièce 20 (voir ci-dessous). Ceci est en particulier le cas lorsque la première pièce 10 est un parechoc.

Ainsi, le support 30 est situé entre la seconde pièce 20 de la carrosserie du véhicule et le reste de la première pièce 10, de telle sorte que le support 30 est caché (par rapport à l'extérieur) par le reste de la seconde pièce 20. Dans le cas d'un parechoc représenté sur la figure 1, la figure 2, et la figure 3, le support 30 est fixé sur la face concave du reste de la première pièce 10, cette face concave étant orientée vers l'arrière du véhicule.

Ainsi, avantageusement, la première pièce 10 présente un espace interne 15 dans lequel sont logés le support 30, et l'organe de guidage 50 (décrit ci-après), de telle sorte que le support 30 et l'organe de guidage 50 sont invisibles depuis l'extérieur du véhicule en position d'assemblage.

Le support 30 est muni d'un organe de guidage 50. Cet organe de guidage 50 est conformé pour être apte à guider l'élément saillant 40 durant l'assemblage de la première pièce 10 avec la seconde pièce 20. Par exemple, comme représenté sur la figure 1, la figure 2, et la figure 3, l'organe de guidage 50 présente un trou avec un orifice 51. La paroi du trou s'évase vers l'orifice 51. Par exemple, le trou est formé par une paroi du support 30 qui est repliée sur elle-même.

Ainsi, le trou de l'organe de guidage 50 présente à son orifice 51 une portion évasée qui se rétrécit au fur et à mesure que l'on pénètre dans le trou et qui se prolonge par une portion rectiligne 54 de longueur A.

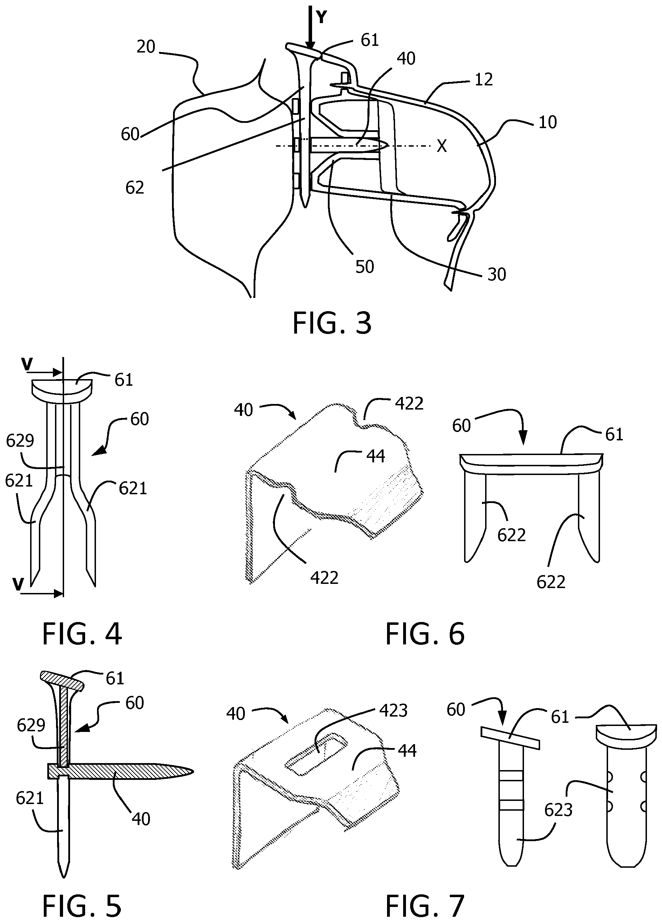

Lorsque la première pièce 10 est assemblée sur la seconde pièce 20, l'élément saillant 40 pénètre dans le trou par l'orifice 51. La forme évasée du trou de l'organe de guidage 50 au niveau de l'orifice 51 permet un guidage pendant l'assemblage de l'élément saillant 40 relativement à l'organe de guidage 50, comme on le voit sur la figure 2 et la figure 3.

La position d'assemblage de la première pièce 10 avec la seconde pièce 20 correspond à une solidarisation de ces deux pièces.

Le support 30 porte un élément de verrouillage 60. Cet élément de verrouillage 60 est configuré pour verrouiller l'élément saillant 40 en position d'assemblage de la première pièce 10 avec la seconde pièce 20, après que l'élément saillant 40 est introduit dans le trou de l'organe de guidage 50. Ce verrouillage s'effectue par coopération entre l'élément de verrouillage 60 et l'élément saillant 40 de telle sorte que l'élément saillant ne peut plus être retiré du trou (d'orifice 51) de l'organe de guidage 50. Ce verrouillage empêche la désolidarisation de ces deux pièces. Ce verrouillage s'effectue par une translation de l'élément de verrouillage 60 (par rapport au support 30) selon un axe Y distinct de l'axe principal X et dans un sens donné (sens de verrouillage). Par axe distinct on entend un axe qui fait un angle non-nul avec l'axe X. La solidarisation entre la première pièce 10 et la seconde pièce 20 est ainsi plus aisée.

Dans le mode de réalisation représenté sur les figures, le mouvement de l'élément saillant 40 est selon une direction (axe) sensiblement perpendiculaire à l'axe principal X. L'axe principal X est de préférence sensiblement l'axe longitudinal du véhicule. Ainsi, l'axe Y et le sens de verrouillage sont indiqués sur la figure 3 par une flèche verticale. L'élément de verrouillage 60 est monté sur le support 30 de telle sorte que sa translation selon cet axe distinct Y est possible.

Pour désolidariser la première pièce 10 de la seconde pièce 20, il est nécessaire de translater l'élément de verrouillage 60 en sens inverse du sens l'ayant amené à coopérer avec l'élément saillant 40.

Par exemple, comme représenté en figure 1, figure 2, et figure 3, l'élément de verrouillage 60 est porté directement par l'organe de guidage 50.

La première pièce 10, la seconde pièce 20, le support 30, l'élément saillant 40, l'organe de guidage 50, l'élément de verrouillage 60 font partie de l'ensemble selon l'invention.

En figure 1, la première pièce 10 est représentée avant son assemblage avec la seconde pièce 20. L'élément saillant 40 n'a alors pas pénétré dans le trou de l'organe de guidage 50.

En figure 2, la première pièce 10 et la seconde pièce 20 sont représentées en position intermédiaire d'assemblage, en fin de guidage de l'élément saillant 40. L'élément saillant 40 a pénétré par l'orifice 51 dans le trou de l'organe de guidage 50, aidé en cela par la paroi évasée du trou qui a permis un centrage de l'élément saillant 40 dans ce trou. A ce stade, l'élément de verrouillage 60 ne verrouille pas l'élément saillant 40.

En figure 3, la première pièce 10 et la seconde pièce 20 sont représentées en position (finale) d'assemblage. L'élément de verrouillage 60 est translaté (abaissé) selon l'axe Y dans la direction de la flèche de telle sorte qu'il verrouille l'élément saillant 40.

La figure 4 montre l'élément de verrouillage 60 utilisé dans l'ensemble représenté en figure 1, figure 2, et figure 3. En figure 4, l'élément de verrouillage 60 est représenté en vue frontale, c'est-à-dire dans un plan perpendiculaire à l'axe principal X après assemblage.

L'élément de verrouillage 60 comprend une tête 61.

Dans le mode de réalisation illustré en figure 4, ainsi que dans les modes de réalisation illustrés en figure 6 et en figure 7 (voir ci-dessous), l'élément de verrouillage 60 comprend un corps 62 qui coopère avec l'élément saillant 40 pour verrouiller cet élément saillant 40 dans le trou de l'organe de guidage 50, en position d'assemblage.

Cette géométrie facilite cet assemblage.

La figure 5 est une vue en coupe de l'élément de verrouillage 60 selon le plan V-V de la figure 4. L'élément saillant 40 est également représenté en coupe dans sa position par rapport à l'élément de verrouillage tel qu'illustré la figure 3.

Comme illustré en figure 4 et en figure 5, le corps 62 comporte une fourche avec deux branches 621, et l'élément saillant 40 présente une gorge 421 qui reçoit les deux branches 621 en position d'assemblage.

L'élément saillant 40 est une tige, et la gorge 421 s'étend sur au moins une partie de la circonférence de cette tige. Par exemple, la gorge 421 peut être constituée de deux gorges latérales séparées (c'est-à-dire que ces deux gorges latérales sont connexes). Par exemple, comme représenté sur les figures 1, 2, 3, et 5, la gorge 421 est circonférentielle et fait le tour de cette tige, cette gorge 421 étant centrée sur l'axe principal X. La gorge 421 est positionnée de telle sorte qu'elle se situe en regard du corps 62 lorsque la première pièce 10 et la seconde pièce 20 sont en position d'assemblage.

L'écartement entre les branches 621 diminue depuis leur extrémité distale vers la tête 61 jusqu'à devenir, à une certaine distance de la tête 61, sensiblement égal au diamètre de l'élément saillant 40 au niveau de la gorge 421 (diamètre rétréci de l'élément saillant 40 au niveau de la gorge 421). Ainsi, lorsqu'on abaisse le corps 62 en direction de l'élément saillant 40, les deux branches 621 de la fourche s'insèrent dans la gorge 421 de chaque côté, de telle sorte que l'élément saillant 40 est positionné entre ces deux branches 621 et que ces branches 621 empêchent, par coopération mécanique, un retrait de l'élément saillant 40 du trou de l'organe de verrouillage 50. Le verrouillage de la première pièce 10 et de la seconde pièce 20 est ainsi réalisé.

La figure 6 illustre un autre mode de réalisation de l'invention dans lequel l'élément de verrouillage 60 et l'élément saillant 40 présentent une autre géométrie.

Le corps 62 comporte deux tiges latérales 622 et l'élément saillant 40 présente deux gorges latérales 422 qui reçoivent chacune une des deux tiges latérales 622 en position d'assemblage.

Ainsi, l'élément saillant 40 est une plaque 44 qui comporte sur chacun de ses bords latéraux une gorge latérale 422 qui est une encoche dans un bord latéral de la plaque 44.

Les deux tiges latérales 622 s'étendent depuis les extrémités de la tête 61 de l'élément de verrouillage 60, perpendiculairement à cette tête 61. La largeur de la tête 61 entre les deux tiges latérales 422 est sensiblement égal à la largeur de la plaque 44, de telle sorte que lorsqu'on translate l'élément de verrouillage 60 vers l'élément saillant 40, les deux tiges latérales 622 s'insèrent dans les gorges latérales 422. Ainsi, on réalise une solidarisation de l'élément saillant 40 avec l'élément de verrouillage 60.

La figure 7 illustre un autre mode de réalisation de l'invention dans lequel l'élément de verrouillage 60 et l'élément saillant 40 présentent une autre géométrie.

Le corps 62 comporte une tige centrale 623 et l'élément saillant 40 présente un trou 423 qui est traversé par la tige centrale 623 en position d'assemblage.

L'élément saillant 40 est une plaque 44 qui présente en son milieu un trou central 423. Par exemple, ce trou central 423 s'étend perpendiculairement à l'axe principal X, comme illustré. La tige centrale 623 s'étend depuis le milieu de la tête 61 de l'élément de verrouillage 60, perpendiculairement à cette tête 61. La largeur de la tige centrale 623 est sensiblement égale à la largeur du trou 423, de telle sorte que lorsqu'on translate l'élément de verrouillage 60 vers l'élément saillant 40, la tige centrale 623 s'insère dans le trou central 423 et y reste positionnée. Ainsi, on réalise une solidarisation de l'élément saillant 40 avec l'élément de verrouillage 60.

Avantageusement, la tige centrale 623 présente sur sa périphérie des encoches qui coopèrent avec le bord du trou central 423, ce qui contribue à solidariser par encliquetage l'élément de verrouillage 60 et l'élément saillant 40 en position d'assemblage.

Plus généralement, le corps 62 (par exemple sur la tige centrale 623, les tiges latérales 622, ou les branches 621) présente des reliefs aptes à coopérer avec l'élément de verrouillage 40 afin de réaliser cette solidarisation. Ces reliefs peuvent être des dépressions telles que des encoches, ou des saillies telles que des godrons.

On décrit ci-dessous le procédé de solidarisation de la première pièce 10 avec la seconde pièce 20, en référence à la figure 1, à la figure 2, et à la figure 3.

La figure 1 montre la première pièce 10 et la seconde pièce 20 avant leur assemblage. La première pièce 10 possède une surface externe 12 qui est visible de l'extérieur du véhicule.

L'élément saillant 40 se situe en dehors du trou de l'organe de guidage 50. L'élément de verrouillage 60 est en position haute de telle sorte que la tête 61 de l'élément de verrouillage 60 dépasse de la surface externe 12 et est visible de l'extérieur (étape (a)).

La figure 2 montre la première pièce 10 et la seconde pièce 20 après que l'élément saillant 40 s'est engagé par l'orifice 51 dans le trou de l'organe de guidage 50. Cet engagement s'est effectué par translation de la première pièce 10 selon l'axe principal X de l'élément saillant 40 en direction de la seconde pièce 20, la forme évasée de l'organe de guidage 50 ayant permis le guidage de l'élément saillant 40 relativement à l'organe de guidage 50. Alternativement, on peut effectuer une translation de la seconde pièce 20 selon l'axe principal X de l'élément saillant 40 en direction de la première pièce 10 (étape (b)).

Le diamètre (ou l'épaisseur) de l'élément saillant 40 étant sensiblement égal au diamètre interne minimum (ou à la hauteur interne minimale) du trou de l'organe de guidage 50, la première pièce 10 est maintenue fixement par rapport à la seconde pièce 20.

La longueur totale L de l'élément saillant 40 est suffisamment grande pour que, en position de verrouillage, une partie au moins de l'élément saillant 40 soit engagée dans la portion rectiligne 54 du trou de l'organe de guidage 50. On minimise ainsi le jeu entre la première pièce 10 et la seconde pièce 20 lorsque ces pièces sont en position finale d'assemblage.

L'élément de verrouillage 60 est encore en position haute de telle sorte que le corps 62 de l'élément de verrouillage 60 n'interfère pas avec l'élément saillant 40 dans sa translation dans le trou de l'organe de guidage 50. En effet, lorsque l'élément de verrouillage 60 est en position haute, la distance entre les branches 621 de l'élément de verrouillage 60 dans le plan (perpendiculaire à la direction longitudinale de l'élément de verrouillage 60) contenant l'élément saillant 40 est supérieure au diamètre de l'élément saillant au niveau de la gorge 421. En effet, comme indiqué plus haut, l'écartement entre les branches 621 augmente depuis la tête 61 vers l'extrémité distale du corps 62 de l'élément de verrouillage 60.

La figure 3 montre la première pièce 10 et la seconde pièce 20 après abaissement par translation selon l'axe Y, distinct de l'axe principal X, de l'élément de verrouillage 60.

Dans le cas illustré sur la figure 3, l'axe Y est perpendiculaire à l'axe principal X.

L'élément de verrouillage 60 est guidé dans sa translation par deux excroissances creuses 53 situés sur les bords de l'orifice 51 du trou de l'organe de guidage 50, de part et d'autre de cet orifice 51. L'élément de verrouillage 60 passe ainsi au travers de la partie centrale creuse de chaque excroissance creuse 53.

Après son abaissement, les branches 621 de l'élément de verrouillage 60 pénètrent dans la gorge 421 de l'élément saillant 40, et empêchent ainsi un retrait de l'élément saillant 40 du trou de l'organe de guidage 50. La première pièce 10 et la seconde pièce 20 sont alors solidarisées en position (finale) d'assemblage (étape (c)).

Le tableau ci-dessous fournit des exemples de valeurs pour les différentes distances et angles caractérisant la géométrie de l'organe de guidage 50 et de l'élément saillant 40 selon l'invention, en référence au mode de réalisation illustré en figure 1.

Avantageusement, la longueur totale L de l'élément saillant 40 est au moins égale à la longueur totale (y compris la longueur des excroissances creuses 53) du trou de l'organe de guidage, de telle sorte qu'en position d'assemblage l'élément saillant 40 est enfoncé dans ce trou sur toute la longueur A de la portion rectiligne de ce trou. La gorge 421 de l'élément saillant 40 se situe alors à l'extrémité proximale de l'élément saillant 40.

| Description | Référence | Valeur idéale (mm) | Plage des valeurs possibles |
|---|---|---|---|
| Longueur totale de l'élément saillant | L | 40 | 15 à 100 |
| Diamètre de l'élément saillant et de la portion rectiligne du trou de l'organe de guidage | D | 6 | 3 à 10 |
| Rapport longueur/diamètre | L/D | 6 | 3 à 10 |
| Diamètre de la gorge de l'élément saillant | C | 4 | 2 à 9 |
| Longueur de la portion rectiligne du trou | A | 12 | 4 à 30 |
| Distance entre les excroissances creuses | B | 24 | 12 à 50 |
| Demi-angle d'évasement du trou | β/2 | 35° | 25 à 60 |
| Longueur de la gorge de l'élément saillant | E | 6 | 2 à 10 |

Comme indiqué plus haut, le trou de l'organe de guidage 50 présente une portion rectiligne 54, puis une portion évasée depuis cette portion rectiligne jusqu'à l'orifice 51 du trou.

Le positionnement de l'organe de verrouillage 60 en position haute par rapport à l'élément saillant 40 (telle qu'illustrée en figure 2) est toujours telle que le corps 62 n'interfère pas avec la ou les gorges (421, 422) ou le trou (423) de l'élément saillant 40.

A l'inverse, en position basse (telle qu'illustrée en figure 3, après translation selon l'axe Y dans la direction de la flèche), le corps 62 de l'organe de verrouillage 60 coopère avec la ou les gorges (421, 422) ou le trou (423) de l'élément saillant 40 pour interdire un retrait de l'élément saillant 40 du trou de l'organe de guidage 50.

Conformément à l'invention, comme illustré en figure 3, la tête 61 de l'élément de verrouillage 60 obture un orifice 13 dans une surface externe 12 de la première pièce 10 en position d'assemblage, et la tête 61 affleure alors avec la surface externe 12.

Ainsi, pour obturer complètement l'orifice 13 en position d'assemblage, les bords de la tête 61 épousent les bords de l'orifice 13. Ceci présente l'avantage d'améliorer l'apparence externe de la première pièce 10.

Pour éviter un enfoncement de la tête 61 en dessous de la surface externe 12, l'élément de verrouillage 60 comporte une butée 629 qui vient en butée sur l'élément saillant 40, sur l'organe de guidage 50, ou sur la première pièce 10 en position d'assemblage.

Cette situation se produit pour toutes les géométries de l'élément de verrouillage 60 décrites en référence à la figure 4, à la figure 5, à la figure 6 et à la figure 7.

Par exemple, comme représenté en figure 5, cette butée 629 est une excroissance de la tête 61, qui est située entre les branches 621 et qui vient en butée sur le fond de la gorge 421 de l'élément saillant 40 en position d'assemblage.

Alternativement, la butée 629 de l'élément de verrouillage 60 vient en butée sur l'organe de guidage 50 en position d'assemblage.

Cette butée peut aussi être un épaulement sur l'élément de verrouillage 60.

Cette butée peut aussi être la face inférieure de la tête 61, qui vient en butée sur un méplat de la première pièce 10 situé en retrait (en dessous) de la surface externe 12 de la première pièce 10.

Ainsi l'invention présente l'avantage d'améliorer l'aspect extérieur du véhicule du point de vue de l'observateur extérieur.

## Revendications

1. Ensemble comprenant une première pièce (10), et une seconde pièce (20) faisant partie de la carrosserie d'un véhicule automobile, ladite première pièce (10) étant destinée à être assemblée sur ladite seconde pièce (20),
- ladite seconde pièce (20) comportant un élément saillant (40) s'étendant selon un axe principal X ;
- ladite première pièce (10) comportant un support (30) muni d'un organe de guidage (50) apte à réaliser un guidage de ladite première pièce (10) relativement audit élément saillant (40) ;
- ledit support (30) portant un élément de verrouillage (60) dudit élément saillant (40) en position d'assemblage de ladite première pièce (10) sur ladite seconde pièce (20) ;
- ledit élément de verrouillage (60) étant configuré pour verrouiller ledit élément saillant (40) en position d'assemblage par un mouvement selon un axe distinct dudit axe principal X, ledit ensemble étant **caractérisé en ce que** ledit élément de verrouillage (60) comprend une tête (61) qui obture un orifice (13) dans une surface externe (12) de ladite première pièce (10) en position d'assemblage et qui affleure avec ladite surface externe (12).

2. Ensemble selon la revendication 1 **caractérisé en ce que** ledit élément de verrouillage (60) comporte une butée (629) qui vient en butée sur ledit élément saillant (40), sur ledit organe de guidage (50), ou sur ladite première pièce (10) en position d'assemblage.

3. Ensemble selon l'une des revendications 1 à 2 **caractérisé en ce que** ladite première pièce (10) présente un espace interne (15) dans lequel sont logés ledit support (30), et ledit organe de guidage (50), de telle sorte que ledit support (30) et ledit organe de guidage (50) sont invisibles depuis l'extérieur dudit véhicule en position d'assemblage.

4. Ensemble selon l'une quelconque des revendications 1 à 3 **caractérisé en ce que** ladite première pièce (10) est un parechoc.

5. Ensemble selon l'une quelconque des revendications 1 à 4 **caractérisé en ce que** ledit élément de verrouillage (60) comprend un corps (62) qui coopère avec ledit élément saillant (40) pour verrouiller ledit élément saillant (40) en position d'assemblage.

6. Ensemble selon la revendication 5 **caractérisé en ce que** ledit corps (62) comporte une fourche avec deux branches (621) et ledit élément saillant (40) présente une gorge (421) qui reçoit lesdites deux branches (621) en position d'assemblage.

7. Ensemble selon la revendication 5 **caractérisé en ce que** ledit corps (62) comporte deux tiges latérales (622) et ledit élément saillant (40) présente deux gorges latérales (422) qui reçoivent chacune une desdites deux tiges latérales (622) en position d'assemblage.

8. Ensemble selon la revendication 5 **caractérisé en ce que** ledit corps (62) comporte une tige centrale (623) et ledit élément saillant (40) présente un trou (423) qui est traversé par ladite tige centrale (623) en position d'assemblage.

9. Procédé d'assemblage d'une première pièce (10) sur une seconde pièce (20) d'un ensemble selon l'une quelconque des revendications 1 à 8, ce procédé étant **caractérisé en ce qu'**il comporte les étapes suivantes :
(a) On fournit la première pièce (10) qui comporte un support (30) muni d'un organe de guidage (50), ledit support (30) portant un élément de verrouillage (60) et la seconde pièce (20) qui comporte un élément saillant (40) s'étendant selon un axe principal X,
(b) On rapproche ladite première pièce (10) et ladite seconde pièce (20) de telle sorte que ledit organe de guidage (50) réalise un guidage de ladite première pièce (10) relativement audit l'élément saillant (40),
(c) On déplace ledit élément de verrouillage (60) selon un axe distinct dudit axe principal X de façon à verrouiller ledit élément saillant (40) en position de solidarisation par rapport audit organe de guidage (50), cette position de solidarisation étant la position d'assemblage.

## Patentansprüche

1. Anordnung, umfassend ein erstes Teil (10) und ein zweites Teil (20), das Teil der Karosserie eines Kraftfahrzeugs ist, wobei das erste Teil (10) dazu bestimmt ist, an dem zweiten Teil (20) montiert zu werden,
- wobei das zweite Teil (20) ein vorspringendes Element (40) aufweist, das sich gemäß einer Hauptachse X erstreckt;
- wobei das erste Teil (10) einen Träger (30) aufweist, der mit einem Führungsmittel (50) versehen ist, das imstande ist, eine Führung des ersten Teils (10) relativ zu dem vorspringenden Element (40) zu realisieren;
- wobei der Träger (30) ein Element zum Verriegeln (60) des vorspringenden Elements (40) in Montageposition des ersten Teils (10) an dem zweiten Teil (20) trägt;
- wobei das Verriegelungselement (60) ausgebildet ist, um in Montageposition das vorspringende Element (40) durch eine Bewegung gemäß einer Achse, die von der Hauptachse X verschieden ist, zu verriegeln, wobei die Anordnung **dadurch gekennzeichnet ist, dass** das Verriegelungselement (60) einen Kopf (61) umfasst, der in Montageposition eine Öffnung (13) in einer Außenfläche (12) des ersten Teils (10) verschließt und der mit der Außenfläche (12) bündig abschließt.

2. Anordnung nach Anspruch 1, **dadurch gekennzeichnet, dass** das Verriegelungselement (60) einen Anschlag (629) aufweist, der in Montageposition an dem vorspringenden Element (40), an dem Führungsmittel (50) oder an dem ersten Teil (10) in Anschlag kommt.

3. Anordnung nach einem der Ansprüche 1 bis 2, **dadurch gekennzeichnet, dass** das erste Teil (10) einen Innenraum (15) aufweist, in dem der Träger (30) und das Führungsmittel (50) in der Form aufgenommen sind, dass in Montageposition der Träger (30) und das Führungsmittel (50) von außerhalb des Fahrzeugs nicht sichtbar sind.

4. Anordnung nach einem der Ansprüche 1 bis 3, **dadurch gekennzeichnet, dass** das erste Teil (10) ein Stoßfänger ist.

5. Anordnung nach einem der Ansprüche 1 bis 4, **dadurch gekennzeichnet, dass** das Verriegelungselement (60) einen Körper (62) umfasst, der mit dem vorspringenden Element (40) zusammenwirkt, um in Montageposition das vorspringende Element (40) zu verriegeln.

6. Anordnung nach Anspruch 5, **dadurch gekennzeichnet, dass** der Körper (62) eine Gabel mit zwei Schenkeln (621) aufweist und das vorspringende Element (40) eine Nut (421) aufweist, die in Montageposition die zwei Schenkel (621) aufnimmt.

7. Anordnung nach Anspruch 5, **dadurch gekennzeichnet, dass** der Körper (62) zwei seitliche Stangen (622) aufweist und das vorspringende Element (40) zwei seitliche Nuten (422) aufweist, die in Montageposition jede eine der zwei seitlichen Stangen (622) aufnimmt.

8. Anordnung nach Anspruch 5, **dadurch gekennzeichnet, dass** der Körper (62) eine mittlere Stange (623) aufweist und das vorspringende Element (40) ein Loch (423) aufweist, das in Montageposition durch die mittlere Stange (623) durchquert wird.

9. Verfahren zum Montieren eines ersten Teils (10) an einem zweiten Teil (20) einer Anordnung nach einem der Ansprüche 1 bis 8, wobei das Verfahren **dadurch gekennzeichnet ist, dass** es die folgenden Schritte umfasst:
(a) Bereitstellen des ersten Teils (10), das einen Träger (30) aufweist, der mit einem Führungsmittel (50) versehen ist, wobei der Träger (30) ein Verriegelungselement (60) trägt, und des zweiten Teils (20), das ein vorspringendes Element (40) aufweist, das sich gemäß einer Hauptachse X erstreckt,
(b) Zusammenführen des ersten Teils und des zweiten Teils (20) in der Form, dass das Führungsmittel (50) eine Führung des ersten Teils (10) relativ zu dem vorspringenden Element (40) realisiert,
(c) Bewegen des Verriegelungselements (60) entlang einer Achse, die von der Hauptachse X verschieden ist, so dass das vorspringende Element (40) in Verbindungsposition in Bezug zu dem Führungsmittel (50) verriegelt wird, wobei diese Verbindungsposition die Montageposition ist.

## Claims

1. Assembly including a first part (10) and a second part (20) that is part of the body of a motor vehicle, said first part (10) being intended for assembly on said second part (20),
- said second part (20) comprising a projecting element (40) extending along a main axis X,
- said first part (10) comprising a holder (30) provided with a guide member (50) for guiding said first part (10) relative to said projecting element (40),
- said holder (30) supporting an element (60) for locking said projecting element (40) in a position for assembly of said first part (10) on said second part (20),
- said locking element (60) being configured to lock said projecting element (40) in the assembly position via a movement along an axis separate from said main axis X,
said assembly being **characterised in that**
said locking element (60) comprises a head (61) which closes an opening (13) in an outer surface (12) of said first part (10) in the assembly position, and which is flush with said outer surface (12).

2. Assembly according to claim 1, **characterised in that** said locking element (60) comprises a stop (629) which abuts on said projecting element (40), on said guide member (50), or on said first part (10) in the assembly position.

3. Assembly according to claim 1 or 2, **characterised in that** said first part (10) has an internal space (15) housing said holder (30) and said guide member (50), so that said holder (30) and said guide member (50) are invisible from outside said vehicle in the assembly position.

4. Assembly according to claim 1 or 3, **characterised in that** said first part (10) is a bumper.

5. Assembly according to any one of claims 1 to 4, **characterised in that** said locking element (60) comprises a body (62) which cooperates with said projecting element (40) to lock said projecting element (40) in the assembly position.

6. Assembly according to claim 5, **characterised in that** said body (62) comprises a fork with two arms (621), and said projecting element (40) has a groove (421) which receives said two arms (621) in the assembly position.

7. Assembly according to claim 5, **characterised in that** said body (62) comprises two lateral rods (622) and said projecting element (40) has two lateral grooves (422) which each receive one of said two lateral rods (622) in the assembly position.

8. Assembly according to claim 5, **characterised in that** said body (62) comprises a central rod (623) and said projecting element (40) has a hole (423) which is crossed by said central rod (623) in the assembly position.

9. Method for assembling a first part (10) on a second part (20) according to claims 1 to 8, this method being **characterised in that** it comprises the following steps:
(a) Providing the first part (10) which comprises a holder (30) provided with a guide member (50), said holder (30) supporting a locking element (60), and the second part (20) which comprises a projecting element (40) extending along a main axis X,
(b) Bringing said first part (10) and said second part (20) together so that said guide member (50) guides said first part (10) relative to said projecting element (40),
(c) Moving said locking element (60) along an axis separate from said main axis X so as to lock said projecting element (40) in the attachment position relative to said guide member (50), this attachment position being the assembly position.
